Europäisches Patentamt

European Patent Office

Office européen des brevets

(19)

(11) Numéro de publication : **0 324 663 B1**

# (12) FASCICULE DE BREVET EUROPEEN

(45) Date de publication du fascicule du brevet :
**15.04.92 Bulletin 92/16**

(51) Int. Cl.$^5$ : **B60G 7/02**, B60G 3/26,
B60G 21/04

(21) Numéro de dépôt : **89400017.3**

(22) Date de dépôt : **03.01.89**

(54) **Train arrière à action passive pour véhicule automobile et véhicule automobile équipé d'un tel train.**

(30) Priorité : **12.01.88 FR 8800275**

(43) Date de publication de la demande :
**19.07.89 Bulletin 89/29**

(45) Mention de la délivrance du brevet :
**15.04.92 Bulletin 92/16**

(84) Etats contractants désignés :
**DE ES GB IT**

(56) Documents cités :
**BE-A- 345 655**
**DE-A- 3 524 763**
**FR-A- 1 107 339**
**FR-A- 2 492 918**
**FR-A- 2 517 259**
**FR-A- 2 564 785**
**FR-A- 2 574 347**
**FR-A- 2 601 297**
**US-A- 3 218 098**
**US-A- 3 670 358**

(56) Documents cités :
**US-A- 4 429 899**
**PATENT ABSTRACTS OF JAPAN, vol. 8, no.
182 (M-319)[1619], 22 août 1984, page 142 M
319; & JP-A-59 75 811 (FUJI JUKOGYO K.K.)
28-04-1984**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Galtier, Lucien
28, rue de Favigny
F-91390 Morsang sur Orge (FR)**
Inventeur : **Barthelemy, André
52 route de Limours
F-78470 Saint-Remy-les-Chevreuse (FR)**

(74) Mandataire : **Berger, Helmut et al
Cabinet Z. WEINSTEIN 20, avenue de
Friedland
F-75008 Paris (FR)**

Jouve, 18, rue Saint-Denis, 75001 PARIS

## Description

La présente invention concerne un train arrière à action passive pour véhicule automobile, notamment du type à bras tirés.

Elle vise également un véhicule automobile équipé d'un tel train arrière.

Les trains arrière du type défini ci-dessus font l'objet d'un calage statique pour assurer le parallélisme des roues avec l'axe du train qui est également l'axe du véhicule.

On sait que lorsqu'un tel train est soumis à des sollicitations transversales en virage, la roue arrière extérieure a tendance à prendre un angle d'ouverture par rapport à l'axe du véhicule.

Ce phénomène résulte en général de l'ensemble des déformations du train arrière et de ses attaches au véhicule, ce qui se traduit par un effet "survireur"", indésirable en sortie du virage.

La présente invention propose un agencement de train arrière permettant, lorsqu'un effort latéral est appliqué sur une roue arrière extérieure du véhicule lorsqu'il se déplace en virage, à cette roue arrière de prendre un angle de pincement vers l'axe du véhicule entraînant un effet "sousvireur".

Pour cela, le train arrière pour véhicule automobile du type comprenant deux supports de roue, par exemple à bras tirés, un cadre sur lequel s'articulent les supports de roues autour d'un axe de pivotement et sur lequel repose la caisse du véhicule par l'intermédiaire de deux liaisons élastiques à rigidité latérale élevée, situées en arrière de l'axe des roues et de deux liaisons élastiques à souplesse latérale élevée, situées en avant de l'axe des roues, est caractérisé en ce que le cadre comprend deux longerons reliés par une traverse et dont chacun est fixé à ses deux extrémités à la caisse respectivement par l'une des liaisons élastiques à rigidité latérale élevée et l'une des liaisons élastiques à souplesse latérale élevée, les axes de pivotement des supports de roues sont solidaires respectivement des longerons et situés sensiblement en alignement dans l'axe de la traverse, les liaisons élastiques ainsi que les liaisons de la traverse aux longerons ont une rigidité axiale ou verticale suffisamment élevée pour maintenir constant le carrossage des roues et en ce que le cadre comporte des moyens lui permettant de se déformer dans un plan horizontal lorsqu'un effort latéral est appliqué à l'une des roues.

Selon une caractéristique de l'invention, les moyens permettant au cadre de se déformer sont constitués par deux points de flexion élastique à sens alternés réalisés sur la traverse et situés symétriquement à l'axe du véhicule.

Selon une autre caractéristique de l'invention, la distance des deux points de flexion à l'axe du véhicule est sensiblement égale à la distance des liaisons élastiques à rigidité latérale élevée à cet axe.

Selon encore une autre caractéristique de l'invention, la traverse est tubulaire et les deux points de flexion sont réalisés chacun par deux déformations latérales opposées de la traverse obtenues par écrasement.

Avantageusement, le train arrière ci-dessus défini comprend également un dispositif mécanique relié d'une part au cadre et d'autre part à la caisse du véhicule et comprenant un élément élastique permettant le pivotement des longerons autour des liaisons élastiques à rigidité latérale élevée lorsqu'un effort latéral appliqué à l'une des roues dépasse une valeur de seuil prédéterminée définie par cet élément élastique.

Selon un autre mode de réalisation de l'invention, les moyens permettant au cadre de se déformer dans un plan horizontal comprennent deux articulations par lesquelles la traverse est reliée aux longerons à chacune de ses extrémités et un dispositif mécanique relié d'une part au cadre et d'autre part à la caisse du véhicule et comprenant un élément élastique permettant le pivotement des longerons autour des liaisons élastiques à rigidité latérale élevée lorsqu'un effort latéral appliqué à l'une des roues dépasse une valeur de seuil prédéterminée définie par cet élément élastique.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :

Les figures 1 et 2 représentent des vues schématiques de dessus d'un train arrière de véhicule automobile suivant un premier mode de réalisation de l'invention ;

La figure 3 représente des courbes caractéristiques de l'angle d'ouverture et de pincement d'une roue arrière extérieure d'un véhicule se déplaçant en virage en fonction de l'accélération latérale ;

Les figures 4 à 6 représentent un train arrière identique à celui des figures 1 et 2 et équipé d'un dispositif mécanique occasionnant un angle de pincement à la roue chargée extérieurement en virage lorsqu'un effort latéral appliqué à cette roue dépasse une valeur de seuil prédéterminée ;

La figure 7 représente des courbes caractéristiques du train arrière des figures 4 à 6 représentant les angles d'ouverture et de pincement de la roue chargée extérieurement lorsque le véhicule se déplace dans un virage ;

Les figures 8 à 10 représentent des vues schématiques de 1 dessus d'un train arrière de véhicule automobile suivant un deuxième mode de réalisation de l'invention ;

La figure 11 représente des courbes caractéristiques du train arrière des figures 8 à 10 relatives aux angles d'ouverture et de pincement de la roue chargée extérieurement en fonction d'une accélération latérale appliquée à la roue ;

La figure 12 est une vue en coupe suivant la ligne XII-XII de la figure 8 d'un premier mode de réalisation d'une articulation reliant une extrémité de la traverse aux longerons correspondants ;

La figure 13 est une vue en coupe identique à celle de la figure 12 d'un deuxième mode de réalisation d'une articulation reliant l'extrémité de la traverse aux longerons correspondants ; et

La figure 14 est une vue en coupe suivant la ligne XIV-XIV de la figure 13.

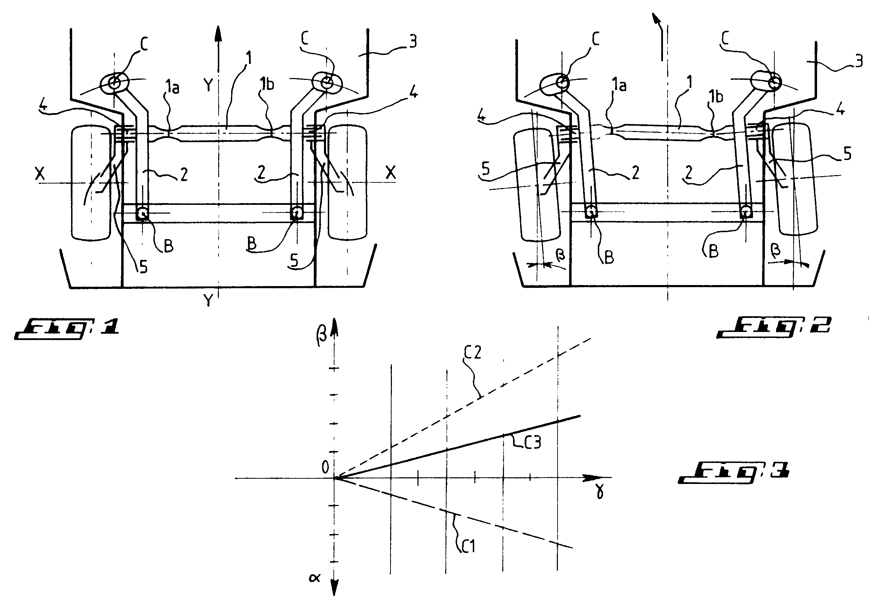

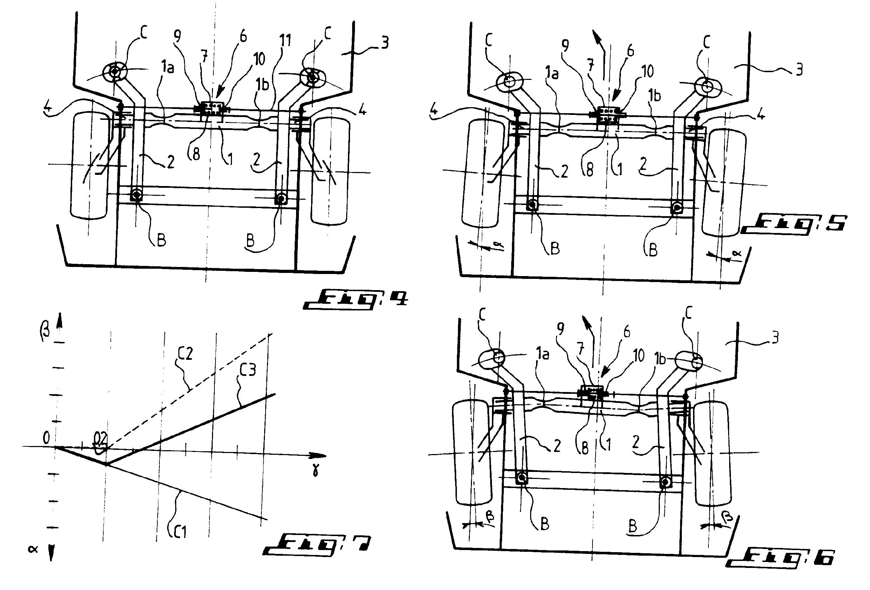

En se reportant aux figures 1 et 2, le train arrière pour véhicule automobile suivant un premier mode de réalisation de l'invention comprend une traverse principale 1 située à l'avant de l'axe X-X des roues arrière et reliée rigidement à ses deux extrémités respectivement à deux longerons 2, un longeron gauche et un longeron droit, sur lesquels repose la caisse 3 du véhicule par l'intermédiaire de quatre liaisons élastiques supportant la charge verticale arrière du véhicule, réparties deux à l'avant et deux à l'arrière de l'axe de roues arrières X-X.

Les liaisons arrière B doivent être situées le plus en arrière possible par rapport à l'axe de roue X-X afin d'augmenter l'efficacité d'action suivant l'axe des roues des forces dues aux accélérations latérales en virage.

La rigidité latérale de ces liaisons élastiques B doit être élevée et les liaisons avant C, latéralement très souples, donnent au train arrière la possibilité de s'articuler de part et d'autre d'un calage statique de parallélisme à zéro représenté en figure 1, dans un plan horizontal.

Deux axes de pivotement 4 sont solidaires respectivement des longerons gauche et droit 2 en étant situés en alignement dans l'axe de la traverse 1 à la position d'équilibre. Deux supports de roues 5, constitués par des bras tirés, s'articulent respectivement sur les deux axes de pivotement 4 et portent chacun la fusée de roue, le moyeu de roue, le dispositif de freinage, la roue etc... (non représentés en détail).

La traverse 1 comporte deux points de flexion élastiques 1a, 1b ou points élastiquement déformables réalisés chacun par deux déformations latérales opposées de la traverse tubulaire obtenues par écrasement de celle-ci.

Les deux points de flexion sont situés symétriquement à l'axe Y-Y du véhicule et leur distance à l'axe du véhicule est sensiblement égale à la distance des liaisons élastiques à rigidité latérale élevée B à cet axe.

La traverse 1 et ses liaisons aux longerons doivent être rigides dans le plan vertical aux figures 1 et 2 afin de maintenir constant le carrossage des roues arrière du véhicule.

Par contre, par la présence des deux points élastiquement déformables 1a et 1b de la traverse 1, cette dernière avec les longerons 2, les axes de pivotement 4 équipés de leur support de roues 5 forme un ensemble train arrière, déformable en plan horizontal, lié à la caisse du véhicule en ses points fixes B et mobile C et dont la rigidité en plan horizontal doit être suffisante pour retrouver après des sollicitations latérales son calage de parallélisme à zéro en statique et interdire tout flottement des roues arrière en ligne droite.

Lorsque le véhicule se déplace dans un virage par exemple à gauche comme représenté en figure 2, le train arrière est soumis à des sollicitations transversales correspondant à des accélérations latérales, la roue arrière extérieure a tendance à prendre un angle d'ouverture par rapport à l'axe longitudinal du véhicule.

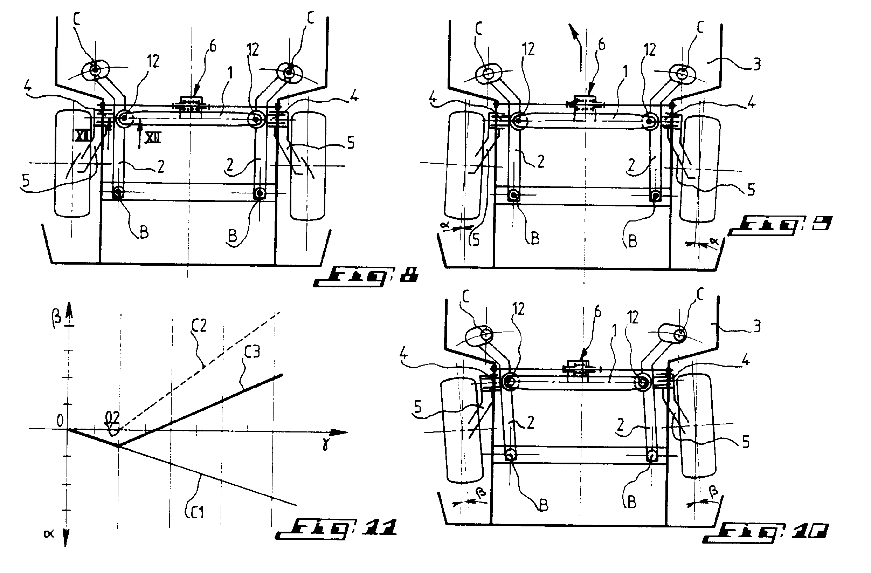

Comme expliqué précédemment, ce phénomène résulte de l'ensemble des déformations du train arrière et de ses attaches à la caisse 3 du véhicule. La courbe C1 de la figure 3 représente la caractéristique angle d'ouverture $\alpha$ de la roue arrière extérieure-accélération latérale $\gamma$. Cependant, ces sollicitations transversales ou latérales créent un couple d'effort appliqué à l'ensemble train arrière tendant à faire pivoter les deux longerons 2 autour des liaisons fixes B par rapport à la caisse 3, mouvement de pivotement limité en valeurs angulaires de part et d'autre de la position de calage en statique du parallélisme à zéro par les liaisons élastiques avant C, et entraînant de ce fait la déformation en plan horizontal de la traverse 1 en ces points de flexion 1a et 1b faisant office d'articulations élastiques. Il s'ensuit un désalignement des axes de la traverse 1 et des axes de pivotement 4 (figure 2) qui entraîne bien sûr le guidage des supports de roues, des roues etc... lors des mouvements angulaires des longerons 2 autour des liaisons B. La courbe C2 représente la valeur d'angle de pincement $\beta$ que prend la roue arrière en fonction de l'accélération latérale en l'absence des déformations générales occasionnant un angle d'ouverture fonction de l'accélération latérale comme indiqué par la courbe C1. La courbe C3 est la courbe résultante obtenue par le train arrière conforme à l'invention dans les conditions décrites ci-dessus. Cette courbe résultante montre ainsi que lors des sollicitations transversales appliquées à la roue chargée extérieurement, celle-ci a tendance à prendre un angle de pincement $\beta$ par rapport à l'axe du véhicule.

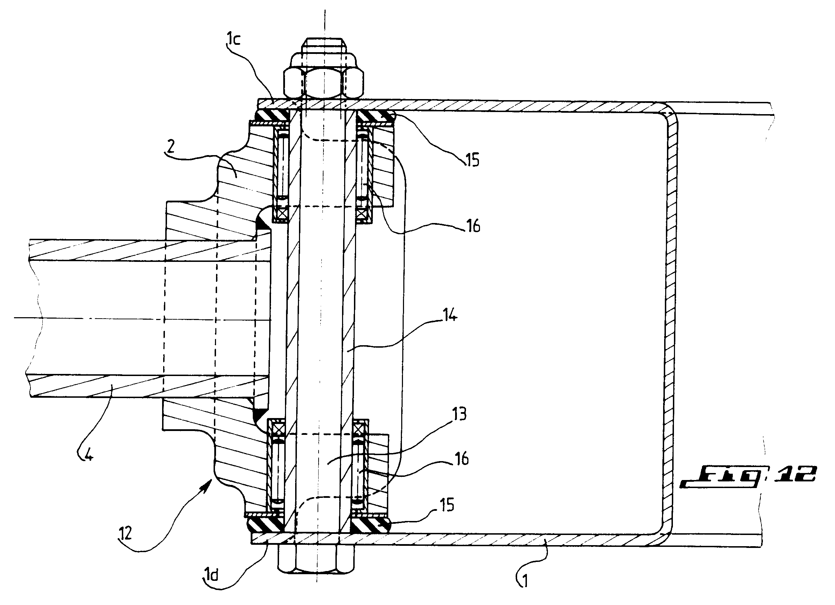

Aux figures 4 à 6, il a été adjoint au train arrière des figures 1 et 2 un dispositif mécanique 6 lié d'une part au cadre du train arrière, dans le cas présent la traverse 1 de celui-ci, et d'autre part à la caisse 3 du véhicule et adapté pour permettre le pivotement des longerons 2 autour de leurs points de liaison fixes B à la caisse lorsqu'un effort latéral appliqué aux roues arrière dépasse une valeur de seuil prédéterminée. Un tel dispositif mécanique a déjà été décrit en détail dans la demande de brevet français N° 86 10102 déposée le 10 Juillet 1986 au nom des demanderesses. D'une manière générale, le dispositif mécanique 6 comprend un corps cylindrique 7 fixé à la traverse 1 dans lequel est logé un élément élastique 8 constitué par un ressort et interposé entre deux entretoises 9 et 10 traversées par un organe formant tirant 11 coaxial au corps cylindrique 7 et relié semi-rigidement à ses extrémités libres à la caisse 3 du véhicule par l'intermédiaire de deux assemblages écrous-contre-écrous-rondelles-garnitures en caoutchouc (non représentés).

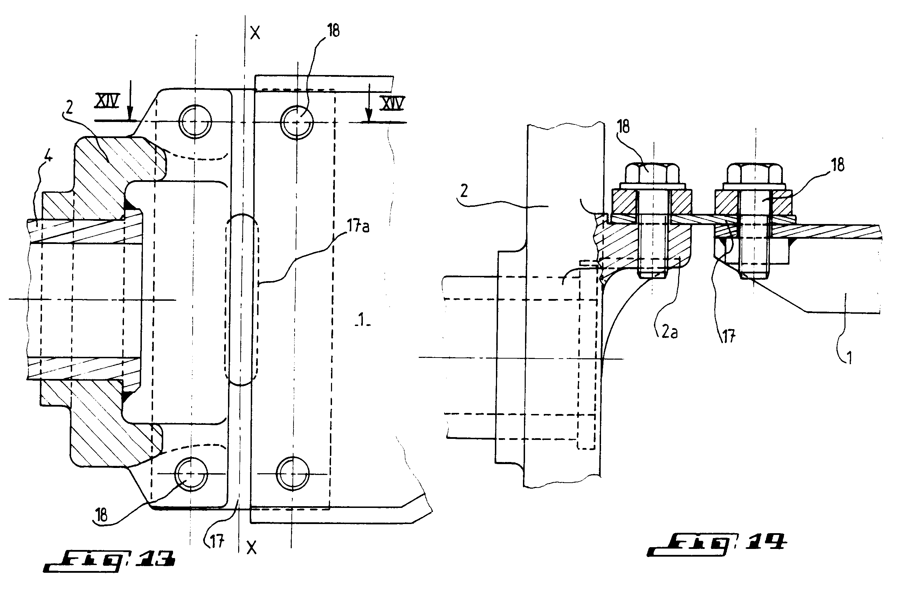

Lorsque le véhicule se déplace dans un virage par exemple à gauche comme représenté aux figures 5 et 6 et que le train arrière est soumis à des sollicitations transversales en virage correspondant à des accélérations latérales en virage d'une valeur inférieure à une valeur prédéterminée, par exemple de 0,2 g, la roue arrière extérieure a tendance à prendre l'angle d'ouverture $\alpha$ par rapport à l'axe longitudinal du véhicule, ce phénomène résultant de l'ensemble des déformations du train arrière et de ses attaches à la caisse du véhicule, déformations amenant l'ensemble essieu à s'articuler par rapport à la caisse du véhicule. La courbe C1 de la figure 7 illustre l'angle d'ouverture $\alpha$ que prend la roue arrière extérieure en fonction de l'accélération latérale inférieure à la valeur de 0,2 g. La courbe C2 montre que dans cette même gamme de valeurs d'accélération latérale (0-0,2 g), le ressort précontraint 8 du dispositif mécanique 6 tend à maintenir le train arrière dans une position relative moyenne, correspondant au parallélisme zéro en statique.

Lorsque l'accélération latérale en virage dépasse la valeur de seuil précitée, le train arrière pivote pour obtenir un angle pré-défini de braquage du train, qui se traduit par un angle de pincement $\beta$ sur la roue arrière extérieure au virage et un angle d'ouverture correspondant sur la roue intérieure au virage, le seuil d'accélération latérale en virage de la valeur de l'angle de pincement étant obtenu par le tarage en position moyenne du ressort de compression 8. Pour augmenter l'efficacité de l'ensemble, la flexibilité des points 1a et 1b de la traverse 1 sera augmentée.

Le dispositif mécanique 6 peut être incorporé dans chacune des liaisons élastiques avant C entre les longerons 2 et la caisse 3 du véhicule comme décrit dans la demande de brevet français N° 86 10102 sus-mentionnée. Deux dispositifs analogues 6 sont ainsi montés symétriquement sur les liaisons élastiques C.

En se reportant aux figures 8 à 10, les différents éléments du train arrière représentés sur ces figures et identiques à ceux représentés aux figures 1, 2 et 4-6 portent les mêmes références.

Sur ces figures 8-10, la traverse 1 est reliée à ses deux extrémités respectivement aux deux longerons 2 par l'intermédiaire d'articulations 12 à axe vertical, ces articulations ainsi que la traverse 1 devant être suffisante en rigidité dans le plan vertical afin de maintenir constant le carrossage des roues arrière. Comme pour les figures 5 et 6, le train arrière selon ce deuxième mode de réalisation comprend le dispositif mécanique 6 relié d'une part à la traverse 1 et d'autre part à la caisse 3 du véhicule et comprenant notamment l'élément élastique 8 permettant le pivotement des longerons 2 autour des liaisons élastiques à rigidité latérale élevée B lorsqu'un effort latéral appliqué à l'une des roues arrière dépasse une valeur de seuil prédéterminée définie par l'élément élastique 8. La figure 11 illustre parfaitement le comportement du train arrière lorsque le véhicule se déplace dans un virage par exemple à gauche. Lorsque l'accélération latérale appliquée sur l'une des roues arrière est inférieure à 0,2g, la roue arrière extérieure a tendance à prendre l'angle d'ouverture $\alpha$ par rapport à l'axe longitudinal du véhicule comme représenté en figure 9, ce phénomène résultant de l'ensemble des déformations du train arrière et de ses attaches à la caisse du véhicule (voir courbe C1). Dans la gamme des valeurs d'accélération latérale de 0 à 0,2g, le ressort 8 tend à maintenir le train arrière dans une position relative moyenne correspondant au parallélisme zéro en statique (voir courbe C2).

Lorsque l'accélération latérale en virage dépasse la valeur de seuil ci-dessus, le train arrière pivote pour obtenir un angle pré-défini de braquage du train, qui se traduit par un angle de pince $\beta$ sur la roue arrière extérieure au virage et un angle d'ouverture correspondant sur la roue intérieure au virage. Ainsi, à partir de la traverse rigide 1 articulée à ses extrémités aux deux articulations 12 avec les deux longerons 2 de support des axes de pivotement 4, articulés chacun autour de leurs points fixes B par rapport à la caisse, on obtient une mobilité latérale en plan horizontal de l'ensemble train arrière à bras tirés, dont les limites en valeurs angulaires de part et d'autre d'un calage en statique du parallélisme à zéro sont assurées par le dispositif mécanique 6 et les liaisons élastiques avant C. En d'autres termes, la traverse 1 et les longerons 2 avec les axes de pivotement 4 équipés des supports de bras 5, fusées de roue etc..., forment un ensemble de train arrière mobile en plan horizontal autour des articulations fixes B avec la caisse et forment avec les articulations verticales 12 un parallélogramme qui peut se déformer angulairement dans le plan horizontal lorsqu'un effort latéral est appliqué à l'une des roues arrière extérieure.

La figure 12 représente un premier mode de réalisation d'une articulation verticale 12 comprenant un boulon 13 reliant l'extrémité de la traverse 1 aux longerons correspondants 2 et des moyens élastiques, de préférence en élastomère, interposés d'une part entre l'extrémité de la traverse 1 et le longeron 2 et d'autre part entre le longeron 2 et la tige du boulon 13 afin que l'articulation ait une rigidité élevée dans le plan vertical et une souplesse latérale relativement grande. Plus précisément, le longeron 2 présente une section transversale sensiblement en forme de U dans chaque branche duquel est réalisé un perçage traversé par la tige du boulon 13 et une entretoise 14 entourant coaxialement la tige sur sensiblement toute sa longueur. L'extrémité de la traverse 1 est constituée de deux pattes parallèles 1c, 1d disposées de part et d'autre des deux branches du U du longeron 2 et également traversées par le boulon 13. Entre chaque patte 1c et 1d et chaque branche du U du longeron 2 est montée coaxialement à la tige du boulon 13 une rondelle élastique 15 faisant partie des moyens élastiques précités et ayant une rigidité axiale élevée et une souplesse latérale relativement grande. La longueur de l'entretoise 14 est légèrement inférieure à la distance séparant les deux pattes 1c et 1d afin de ne pas écraser les rondelles 15 lors du serrage du boulon 13.

Les moyens élastiques comprennent également deux douilles élastiques 16 à souplesse latérale identique à celle des rondelles 15 et emmanchées respectivement dans les deux perçages des branches du U du longeron 2 en entourant coaxialement l'entretoise 14. La figure 12 montre également la présence de l'axe de pivotement 4 solidaire par soudage du longeron 2.

Chaque articulation selon le deuxième mode de réalisation représenté aux figures 13 et 14 est constituée d'une lame métallique 17 de relativement faible épaisseur montée perpendiculairement à l'axe du véhicule et fixée à ses deux extrémités, par l'intermédiaire de vis de fixation 18, respectivement à une extrémité de la traverse 1 et une patte verticale de fixation 2a solidaire du longeron 2. La lame métallique 17 a son axe longitudinal X-X formant axe vertical d'articulation par flexion de la lame 17 lors de sollicitations latérales en virage. Afin d'augmenter la flexibilité de la lame 17, celle-ci peut comporter une partie évidée en forme de trou oblong 17a suivant l'axe X-X.

Les différents modes de réalisation du train arrière à action passive décrits précédemment sont d'une conception simple, à nombre de pièces restreint par rapport aux trains arrière classiques à bras tirés et leur principe est basé sur un choix judicieux des positions des points de liaison, de la définition de leur rôle ainsi que des points flexibles permettant d'obtenir la géométrie recherchée.

## Revendications

1. Train arrière pour véhicule automobile, du type comprenant deux supports de roues, par exemple à bras tirés, un cadre sur lequel s'articulent les supports de roues autour d'un axe de pivotement et sur lequel repose la caisse du véhicule par l'intermédiaire de deux liaisons élastiques à rigidité latérale élevée, situées en arrière de l'axe des roues, et de deux liaisons élastiques à souplesse latérale élevée, situées en avant de l'axe des roues, caractérisé en ce que le cadre comprend deux longerons (2) reliés par une traverse (1) et donc chacun est fixé par ses deux extrémités à la caisse (3) respectivement par l'une des liaisons élastiques à rigidité latérale élevée (B) et l'une des liaisons élastiques à souplesse latérale élevée (C), les axes de pivotement (4) des supports de roues (5) sont solidaires respectivement des longerons (2) et situés sensiblement en alignement dans l'axe de la traverse (1), les liaisons élastiques (B, C) ainsi que les liaisons de la traverse (1) aux longerons (2) ont une rigidité axiale ou verticale suffisamment élevée pour maintenir constant le carrossage des roues ; et en ce que le cadre comporte des moyens (1a, 1b ; 12) lui permettant de se déformer dans un plan horizontal lorsqu'un effort latéral est appliqué à l'une des roues.

2. Train arrière selon la revendication 1, caractérisé en ce que les moyens précités permettant au cadre de se déformer sont constitués par deux points de flexion élastique (1a, 1b) à sens alternés réalisés sur la traverse (1) et situés symétriquement à l'axe du véhicule.

3. Train arrière selon la revendication 2, caractérisé en ce que la distance des deux points de flexion (1a, 1b) à l'axe du véhicule est sensiblement égale à la distance des liaisons élastiques à rigidité latérale élevée (B) à cet axe.

4. Train arrière selon la revendication 2 ou 3, caractérisé en ce que la traverse (1) est tubulaire et les deux points de flexion (1a, 1b) sont réalisés chacun par deux déformations latérales opposées de la traverse obtenues par écrasement de celle-ci.

5. Train arrière selon l'une des revendications précédentes, caractérisé en ce qu'il comporte en outre un dispositif mécanique (6) relié d'une part au cadre et d'autre part à la caisse (3) du véhicule et comprenant un élément élastique (8) permettant le pivotement des longerons (2) autour des liaisons élastiques à rigidité latérale élevée (B) lorsqu'un effort latéral appliqué à l'une des roues dépasse une valeur de seuil prédéterminée définie par l'élément élastique (8).

6. Train arrière selon la revendication 1, caractérisé en ce que les moyens permettant au cadre de se déformer dans un plan horizontal comprennent deux articulations (12) par lesquelles la traverse (1) est reliée aux longerons (2) à chacune de ses extrémités et un dispositif mécanique (6) relié d'une part au cadre et d'autre part à la caisse (3) du véhicule et comprenant un élément élastique (8) permettant le pivotement des longerons (2) autour des liaisons élastiques à rigidité latérale élevée (B) lorsqu'un effort latéral appliqué à l'une des roues dépasse une valeur de seuil prédéterminée définie par l'élément élastique (8).

7. Train arrière selon la revendication 6, caractérisé en ce que chaque articulation (12) comprend un organe (13), tel qu'un boulon reliant l'extrémité de la traverse (1) aux longerons correspondants (2) et des moyens élastiques (15, 16) interposés d'une part entre l'extrémité de la traverse (1) et le longeron (2) et d'autre part entre le longeron (2) et la tige du boulon (13) afin que l'articulation ait une rigidité élevée dans le plan vertical et une souplesse latérale relativement grande.

8. Train arrière selon la revendication 7, caractérisé en ce que chaque longeron (2) présente une section transversale sensiblement en forme de U dont les branches sont respectivement fixées par l'intermédiaire du boulon (13) à deux pattes parallèles extrêmes (1c, 1d) de la traverse (1) et en ce que les moyens élastiques comprennent deux organes en forme de rondelles (15) fixés respectivement entre une patte extrême (1c) de la traverse (1) et une branche du U et l'autre patte extrême (1d) de la traverse (1) et l'autre branche du U.

9. Train arrière selon la revendication 8, caractérisé en ce que les moyens élastiques comprennent de plus deux douilles élastiques (16) montées respectivement dans deux perçages correspondants réalisés respectivement dans les deux branches du U et entourant coaxialement la tige du boulon (13).

10. Train arrière selon la revendication 6, caractérisé en ce que chaque articulation (12) comprend une lame métallique (17) de relativement faible épaisseur perpendiculaire à l'axe du véhicule et fixée à ses deux extrémités, par exemple par l'intermédiaire de vis de fixation (18), respectivement à une extrémité de la traverse (1) et une partie correspondante du longeron (2) de manière à présenter en son centre un axe vertical d'articulation par flexion de la lame (17).

11. Véhicule automobile équipé d'un train arrière selon l'une quelconque des revendications 1 à 10.

**Patentansprüche**

1. Hinterradsatz für Kraftfahrzeug, derjenigen Gattung mit zwei Radträgern z.B. mit gezogenen Armen, einem Rahmen an welchem die Radträger um einem Schwenkzapfen herum angelenkt sind und auf welchem der Kasten des Fahrzeugs über zwei hinter der Achse der Räder gelegene elastische Verbindungen mit hoher Seitensteifheit und zwei vor der Achse der Räder gelegene elastische Verbindungen mit hoher Seitennachgiebigkeit ruht, dadurch gekennzeichnet, dass der Rahmen zwei durch einen Querträger (1) verbundene Längsträger (2) aufeist, von denen jeder mit seinen beiden Enden an dem Kasten (3) jeweils durch eine der elastischen Verbindungen mit hoher Seitensteifheit (B) und eine der elastischen Verbindungen mit hoher Seitennachgiebigkeit (C) verbunden ist, wobei die Schwenkzapfen (4) der Radträger (5) jeweils mit den Längsträgern (2) fest verbunden sind und mit der Achse des Querträgers (1) im wesentlichen fluchtend liegen, die elastischen Verbindungen (B,C) sowie die Verbindungen des Querträgers (1) mit den Längsträgern (2) eine genügend hohe axiale bzw. senkrechte Steifheit haben, um den Radsturz konstant zu halten; und dass der Rahmen Mittel (1a,1b;12) aufweist, die ihm gestatten, sich in einer waagerechten Ebene zu verformen, wenn eine Seitenkraft an einem der Räder angelegt ist.

2. Hinterradsatz nach Anspruch 1, dadurch gekennzeichnet, dass die vorgenannten Mittel, die dem Rahmen gestatten, sich zu verformen, durch zwei an dem Querträger (1) gebildete und symmetrisch zur Achse des Fahrzeugs liegende Punkte (1a,1b) zur elastischen Biegung in wechselenden Richtungen gebildet sind.

3. Hinterradsatz gemäss Anspruch 2, dadurch gekennzeichnet, dass die Entfernung der beiden Biegepunkte (1a,1b) von der Achse des Kraftfahrzeugs im wesentlichen gleich der Entfernung der elastischen Verbindungen mit hoher Seitensteifheit (B) von dieser Achse ist.

4. Hinterradsatz nach Anspruch 2 oder 3, dadurch gekennzeichnet, dass der Querträger (1) rohrförmig ist und die beiden Biegepunkte (1a,1b) jeweils durch zwei entgegengesetzte Seitenverformungen des Querträgers, die durch Zusammendrücken desselben erhalten werden, gebildet sind.

5. Hinterradsatz nach einem der vorangehenden Ansprüche, dadurch gekennzeichnet, dass er ausserdem eine einerseits mit dem Rahmen und andererseits mit dem Kasten (3) des Fahrzeugs verbundene mechanische Vorrichtung (6) aufweist, mit einem elastischen Element (8), dass das Verschwenken der Längsträger (2) um die elastischen Verbindungen mit hoher Seitensteifheit (B) herum gestattet, wenn eine an einem der Räder angelegte Seitenkraft einen durch das elastische Element (8) festgelegten vorbestimmten Schwellenwert überschreitet.

6. Hinterradsatz nach Anspruch 1, dadurch gekennzeichnet, dass die, die Verformung des Rahmens in einer waagerechten Ebene gestattenden Mittel zwei Gelenke (12) durch welche der Querträger (1) mit den Längsträgern (2) an jedem ihrer Enden verbunden ist und eine einerseits mit dem Rahmen und andererseits mit dem Kasten (3) des Fahrzeugs verbundene mechanische Vorrichtung (6) aufweisen, wobei die letztere ein elastisches Element (8) aufweist, welches das Verschwenken der Längsträger (2) um die elastischen Verbindungen mit hoher Seitensteifheit (B) herum gestattet, wenn eine an einem der Räder angelegte Seitenkraft einen durch das elastische Element (8) festgelegten vorbestimmten Schwellenwert überschreitet.

7. Hinterradsatz nach Anspruch 6, dadurch gekennzeichnet, dass jedes Gelenk (12) ein Glied (13), einen das Ende des Querträgers (1) mit den entsprechenden Längsträgern (2) verbindenden Bolzen und elastische Mittel (15,16) aufweist, welche einerseits zwischen dem Ende des Querträgers (1) und dem Längsträger (2) und andererseits zwischen dem Längsträger (2) und dem Schaft des Bolzens (13) angeordnet sind, damit das Gelenk eine hohe Steifheit in der lotrechten Ebene und eine verhältnismässig grosse Seitenachgiebigkeit hat.

8. Hinterradsatz gemäss Anspruch 7, dadurch gekennzeichnet, dass jeder Längsträger (2) einen im wesentlichen U-förmigen Querschnitt aufweist, dessen Schenkel jeweils über den Bolzen (13) an zwei parallele Endansätze (1c,1d)) des Querträgers (1) befestigt sind und dass die elastischen Mittel zwei jeweils zwischen einem Endansatz (1c) des Querträgers (1) und einem Schenkel des U's und dem anderen Endansatz (1d) des Querträgers (1) und dem anderen Schenkel des U's befestigte unterlegscheibenförmige Glieder aufweisen.

9. Hinterradsatz nach Anspruch 8, dadurch gekennzeichnet, dass die elastischen Mittel ausserdem zwei elastische Hülsen (16) aufweisen, welche jeweils in zwei jeweils in den beiden Schenkeln des U's ausgebildeten Bohrungen angeordnet sind und den Schaft des Bolzens (13) koaxial umgeben.

10. Hinterradsatz nach Anspruch 6, dadurch gekennzeichnet, dass jedes Gelenk (12) ein Metallblatt (17) verhältnismässig schwacher Dicke aufweist, das senkrecht zu der Achse des Fahrzeugs steht und mit seinen beiden Enden z.B. über Befestigungsschrauben (18) jeweils an einem Ende des Querträgers (1) und einem entsprechenden Teil des Längsträgers (2) derart befestigt ist, das es in seinem Mittelpunkt eine lotrechte Achse zur Anlenkung durch Biegung des Blattes (17) aufweist.

11. Mit einem Hinterradsatz nach irgendeinem der Ansprüche 1 bis 10 ausgestattetes Kraftfahrzeug.

## Claims

1. Back axle assembly for an automotive vehicle, of the type comprising two wheel supports for example with pulled arms, a frame onto which the wheel supports are pivoted about a pivot axis and onto which is resting the body of the vehicle through the medium of two elastic connections with a high lateral rigidity, located rearwards of the axis of the wheels, and of two elastic connections with a high lateral flexibility, located forward of the axis of the wheels, characterized in that the frame comprises two stringers (2) connected by a cross-member (1) and each one of which is fastened with its two ends to the body (3), respectively, by one of the elastic connections with a high lateral rigidity (B) and one of the elastic connections with a high lateral flexibility (C), the pivot axes (4) of the wheel supports (5) are made fast to the stringers (2), respectively, and located substantially in alignment with the axis of the cross-member (1), the elastic connections (B,C) as well as the connections of the cross-member (1) to the stringers (2) have an axial or vertical rigidity high enough to maintain constant the camber of the wheels; and in that the frame comprises means (1a,1b;12) allowing it to deform itself in a horizontal plane when a lateral force is applied to one of the wheels.

2. Back axle assembly according to claim 1, characterized in that the aforesaid means allowing the frame to deform itself are constituted by two points (1a,1b) of elastic bending in alternate directions provided on the cross-member (1) and located in symmetric relation to the axis of the vehicle.

3. Back axle assembly according to claim 2, characterized in that the distance of both bending points (1a,1b) from the axis of the vehicle is substantially equal to the distance of the elastic connections with a high lateral rigidity (B) from this axis.

4. Back axle assembly according to claim 2 or 3, characterized in that the cross-member (1) is tubular and both flexure points (1a,1b) are provided each one by two opposite lateral deformations of the cross-member obtained by squashing of the latter.

5. Back axle assembly according to one of the foregoing claims, characterized in that it further comprises a mechanical device (6) connected on the one hand to the frame and on the other hand to the body (3) of the vehicle and comprising an elastic element (8) allowing the pivoting of the stringers (2) about the elastic connections with a high lateral rigidity (B) when a lateral force applied to one of the wheels exceeds a predetermined threshold value defined by the elastic element (8).

6. Back axle assembly according to claim 1, characterized in that the means allowing the frame to deform itself in a horizontal plane comprise two pivotal connections (12) through which the cross-member (1) is connected to the stringers (2) at each one of its ends and a mechanical device (6) connected on the one hand to the frame and on the other hand to the body (3) of the vehicle and comprising an elastic element (8) allowing the pivoting of the stringers (2) about the elastic connections with a high lateral rigidity (B) when a lateral force applied to one of the wheels exceeds a predetermined threshold value defined by the elastic element (8).

7. Back axle assembly according to claim 6, characterized in that each pivotal connection (12) comprises a member (13) such as a bolt connecting the end of the cross-member (1) to the corresponding stringers (2) and elastic means (15,16) interposed on the one hand between the end of the cross-member (1) and the stringer (2) and on the other hand between the stringer (2) and the shank of the bolt (13) in order that the pivotal connection have a high rigidity in the vertical plane and a relatively great lateral flexibility.

8. Back axle assembly according to claim 7, characterized in that each stringer (2) exhibits a substantially U-shaped cross-section the legs of which are fastened through the medium of the bolt (13) to two parallel end lugs (1c,1d), respectively, of the cross-member (1) and in that the elastic means comprise two washer-shaped members (15) fastened between one end lug (1c) of the cross-member (1) and one leg of the U and the other end lug (1d) of the cross-member (1) and the other leg of the U, respectively.

9. Back axle assembly according to claim 8, characterized in that the elastic means further comprise two elastic sleeves (16) mounted in two corresponding bores, respectively, formed in both legs of the U, respectively, and coaxially surrounding the shank of the bolt (13).

10. Back axle assembly according to claim 6, characterized in that each pivotal connection (12) comprises a metal blade (17) of relatively small thickness, perpendicular to the axis of the vehicle and fastened at its two ends for example through the medium of fastening screws (18) to one end of the cross-member (1) and a corresponding portion of the stringer (2), respectively, so as to provide at its centre a vertical axis of pivotal connection through bending of the blade (17).

11. Automotive vehicle fitted with a back axle assembly according to any one of claims 1 to 10.

Fig.1

Fig.2

Fig.3

Fig. 5

Fig. 6

Fig. 4

Fig. 7

Fig. 9

Fig. 10

Fig. 8

Fig. 11

Fig. 12

Fig.14

Fig.13